# EUROPÄISCHE PATENTANMELDUNG

(11) **EP 1 647 684 A2**
(43) Veröffentlichungstag der Anmeldung: **19.04.2006**
(21) Anmeldenummer: 05019825.8
(22) Anmeldetag: 13.09.2005
(51) Int. Cl.: F02B 43/10

(54) **Wasserstoffmotor mit optimierter Kraftstoffeinblasvorrichtung**

(30) Priorität: 12.10.2004 DE 102004049589
(71) Anmelder: Bayerische Motoren Werke Aktiengesellschaft, 80809 München (DE)
(72) Erfinder: Hallmannsegger, Michael, 81479 München (DE); Kresse, Timo, 80469 München (DE); Heller, Klaus, 80796 München (DE); Fickel, Hans-Christian, 85368 Moosburg (DE)

(57) **Zusammenfassung**

Mit Wasserstoff betreibbarer Verbrennungsmotor für Fahrzeuge, mit
- mindestens einem Zylinder,
- einem in dem Zylinder angeordneten Kolben, der zwischen einer unteren Kolbenstellung und einer oberen Kolbenstellung verschiebbar ist, wobei durch die untere und die obere Kolbenstellung ein Richtungsvektor definiert ist, der von der unteren zur oberen Kolbenstellung orientiert ist,
- einem Zylinderkopf, der den Zylinder von seiner oberen Stirnseite her verschließt,
- einer in dem Zylinderkopf vorgesehenen Einlassöffnung und einem Einlassventil,
- einem mit dem Zylinderkopf verbundenen Einlasskanal, der bei geöffnetem Einlassventil über die Einlassöffnung in Fluidverbindung mit dem Zylinder steht, und
- einem Wasserstoffkanal, der in den Einlasskanal mündet, wobei die Richtung und die Orientierung, in der der Wasserstoffkanal in den Einlasskanal mündet, durch einen Mündungsvektor beschrieben ist,

Der Wasserstoffkanal ist so angeordnet, dass der Mündungsvektor eine Vektorkomponente aufweist, welche dieselbe Richtung und dieselbe Orientierung wie der Richtungsvektor aufweist.

## Beschreibung

Die vorliegende Erfindung betrifft einen mit Wasserstoff betreibbaren Verbrennungsmotor gemäß dem Oberbegriff des Patentanspruches 1.

Bereits seit,geraumer Zeit werden Verbrennungsmotoren erforscht, die mit Wasserstoff betreibbar sind. Das Grundkonzept derartiger Verbrennungsmotoren entspricht dem herkömmlicher Hubkolbenmotoren mit einem oder mehreren Zylindern. Ähnlich wie bei herkömmlichen Verbrennungsmotoren können auch bei Wasserstoffmotoren Verbrennungsanomalien wie
- Klopfen,
- Glüh- bzw. Frühzündung oder
- Rückzündung
auftreten. Verbrennungsanomalien entstehen bevorzugt an "Hot-Spots", d.h. an besonders heißen Stellen des Brennraums. Kritische Brennraumbereiche sind insbesondere die Zündkerze bzw. der Bereich um die Zündkerze, der Auslassventilteller, Ventilstege sowie das "Brennraumdach", d.h. die den Zylinder begrenzende Zylinderkopfwandung im Bereich zwischen der Zündkerze und den Auslassventilen. Untersuchungen haben ergeben, dass man durch die Gestaltung der Ansaugvorrichtung, über die der Kraftstoff dem Zylinder zugeführt wird, wesentlich auf die Entstehung bzw. Vermeidung von Verbrennungsanomalien Einfluss nehmen kann.

Aufgabe der Erfindung ist es, einen mit Wasserstoff betreibbaren Verbrennungsmotor zu schaffen, bei dem die "Ansaugvorrichtung" so gestaltet ist, dass Verbrennungsanomalien weitgehend vermieden werden.

Diese Aufgabe wird durch die Merkmale der Patentansprüche 1 und 2 gelöst. Vorteilhafte Ausgestaltungen und Weiterbildungen der Erfindung sind den Unteransprüchen zu entnehmen.

Simulationen haben ergeben, dass durch Variieren der Richtung, in der der kryogene Wasserstoff in den Einlasskanal eingeblasen wird, "kritische Brennraumbereiche" verstärkt gekühlt und somit "Hot-Spots" vermieden werden können. Bei herkömmlichen Verbrennungsmotoren, bei denen der Kraftstoff üblicherweise "von oben nach unten" in Richtung des Einlassventils in den Einlasskanal eingespritzt bzw. eingeblasen wird, trifft der Kraftstoff auf die Einlassventile bzw. den unteren Bereich des Einlasskanals auf und gelangt von dort über die Einlassventile in den Brennraum. Bei einer Kraftstoffeinblasung "von oben nach unten" ist eine erhöhte Wasserstoffkonzentration im Bereich der Zylinderwandung während des Ansaugens festzustellen. Brennraumbereiche rund um die Zündkerze bzw. im Bereich zwischen der Zündkerze und dem Auslassventil weisen demgegenüber eine geringere Kraftstoffkonzentration auf und werden dementsprechend schlecht gekühlt.

Das Grundprinzip der Erfindung besteht nun darin, die Wasserstoffkonzentration im oberen Brennraumbereich zu erhöhen, indem der Kraftstoff nicht "nach unten", sondern "nach oben" in den Einlasskanal eingeblasen wird. Will man die Erfindung physikalisch exakter beschreiben, so kann ein Richtungsvektor definiert werden, der durch die Bewegungsrichtung des in dem Zylinder angeordneten Kolbens beschreibbar ist. Ausgehend von einer unteren Totpunktstellung des Kolbens kann der Kolben im Zylinder nach oben verschoben werden. Der Richtungsvektor ist durch die untere und die obere Kolbenstellung definiert und von der unteren zur oberen Kolbenstellung orientiert. Die "Mündungsrichtung", in der der Kraftstoff bzw. Wasserstoff in den Einlasskanal eingeblasen wird, kann durch einen "Mündungsvektor" beschrieben werden. Wie bereits erwähnt, besteht der Kern der Erfindung darin, dass der Kraftstoff "von unten nach oben" in den Einlasskanal eingeblasen wird. Mathematisch lässt sich dies so beschreiben, dass der Mündungsvektor eine Vektorkomponente aufweist, welche dieselbe Richtung und dieselbe Orientierung wie der durch die Kolbenstellungen definierte Richtungsvektor aufweist.

Um Missverständnisse zu vermeiden, soll das Grundprinzip der Erfindung noch in anderer Weise beschrieben werden. Die Zündkerze ist in Bezug auf den Zylinder in einem Zentralbereich des Zylinderkopfs angeordnet. Die Einlassöffnung, über die das Wasserstoff-Luft-Gemisch in den Zylinder eingebracht wird, ist in Bezug auf die Position der Zündkerze radial außerhalb des "Zentralbereichs" angeordnet. Die Einlassöffnung steht in Fluidverbindung mit dem Einlasskanal, in den der Wasserstoff eingeblasen wird. Schneidet man den Einlasskanal gedanklich in Längsrichtung des Einlasskanals auseinander, so erhält man eine erste Einlasskanalhälfte und eine zweite Einlasskanalhälfte. Der Schnitt wird gedanklich so gelegt, dass die erste Einlasskanalhälfte nahe der Zündkerze und die zweite Einlasskanalhälfte nahe der Zylinderwand in den Zylinder einmündet. Ausgehend von den in dieser Weise definierten Einlasskanalhälften kann das Grundprinzip der Erfindung auch so beschrieben werden, dass der Wasserstoff in Richtung der ersten Einlasskanalhälfte in den Einlasskanal eingeblasen wird. Ein Großteil des eingeblasenen Wasserstoffs trifft auf die erste Einlasskanalhälfte auf. Ein Teil des auftreffenden Wasserstoffs "fließt" als "Wasserstofffilm" an der Innenseite der ersten Einlasskanalhälfte in Richtung zur Einlassöffnung. Dadurch ist sichergestellt, dass sich im Bereich rund um die Zündkerze sowie im Bereich des "Brennraumdachs" eine erhöhte Wasserstoffkonzentration einstellt. Da der Wasserstoff im Vergleich zur Luft eine bessere Kühlwirkung hat (verbesserter Wärmeübergang und sieben mal höhere Wärmeleitfähigkeit), werden vor allem bei der Verwendung von kryogenem Wasserstoff "Hot-Spots" in den besonders kritischen Brennraumbereichen rund um die Zündkerze sowie im Bereich zwischen der Zündkerze und dem Auslassventil bzw. den Auslassventilen vermieden.

Der "Wasserstoffkanal" bzw. die "Wasserstoffdüse", über den bzw. über die der Wasserstoff in den Einlasskanal eingeblasen wird, kann rechtwinklig oder schräg in Bezug auf eine Längsachse des Einlasskanals angeordnet sein. Bei einer schrägen Einblasung kann der Wasserstoff schräg in Richtung des Einlassventils oder schräg entgegengesetzt der Strömungsrichtung des angesaugten Wasserstoff-Luftgemischs eingeblasen werden.

Im Folgenden wird die Erfindung im Zusammenhang mit der Zeichnung näher erläutert. Es zeigen:
- Figur 1a: Einen Querschnitt durch einen Wasserstoffmotor;
- Figur 1b: die beiden Einlasskanäle eines Zylinders des Wasserstoffmotors der Figur 1a;
- Figur 2: einen Querschnitt durch einen Einlasskanal mit einigen Isothermen;
- Figur 3: die Temperaturverteilung zu einem späteren Zeitpunkt nach dem Öffnen des Einlassventils; und
- Figur 4: die Temperaturverteilung bei einer Kraftstoffeinblasung von oben nach unten, entsprechend der Situation bei herkömmlichen Verbrennungsmotoren.

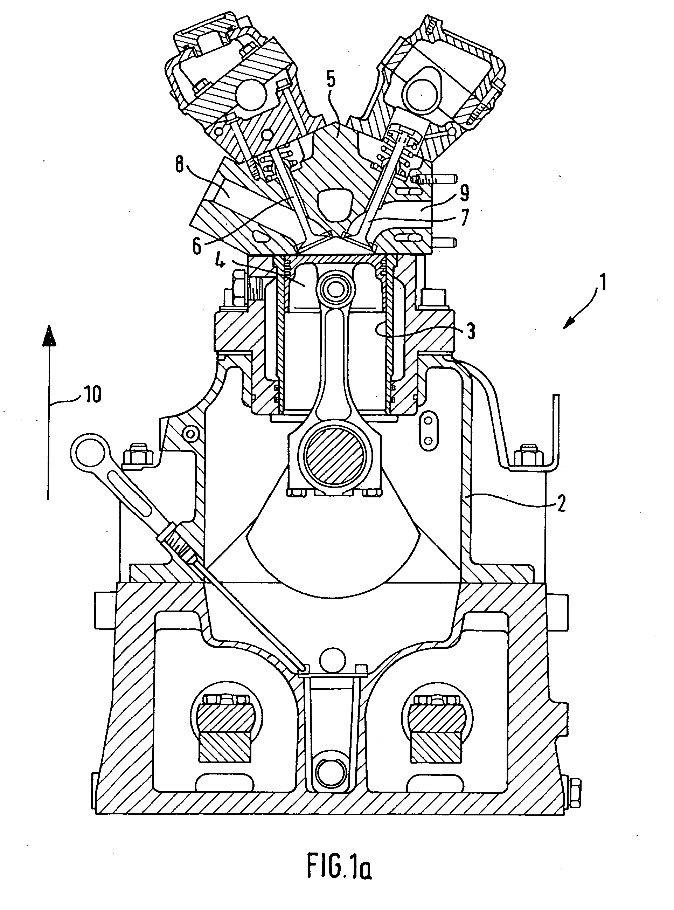

Figur 1a zeigt einen Querschnitt durch einen mit Wasserstoff betreibbaren Verbrennungsmotor 1, der ein Kurbelgehäuse 2, einen Zylinder 3 und einen verschieblich darin angeordneten Kolben 4 aufweist. In der hier gezeigten Kolbenstellung befindet sich der Kolben im "oberen Totpunkt". Nach oben hin ist der Zylinder 3 durch einen Zylinderkopf 5 verschlossen. Über Einlassventile 6 und Auslassventile 7, von denen in dem hier gezeigten Querschnitt jeweils nur eines zu sehen ist, steht der Zylinder 3 intermittierend in Fluidverbindung mit Einlasskanälen 8 bzw. Auslasskanälen 9. Bei geöffneten Einlassventilen 8 kann dem Zylinder 3 über den Einlasskanal 8 ein KraftstoffLuftgemisch zugeführt werden. Bei geöffneten Auslassventilen 7 kann Abgas aus dem Zylinder 3 über die Auslasskanäle 9 abgeführt werden.

Die Bewegung des Kolbens 4 von seiner unteren Totpunktstellung in die Figur 1a gezeigte obere Totpunktstellung kann durch einen Richtungsvektor 10 beschrieben werden.

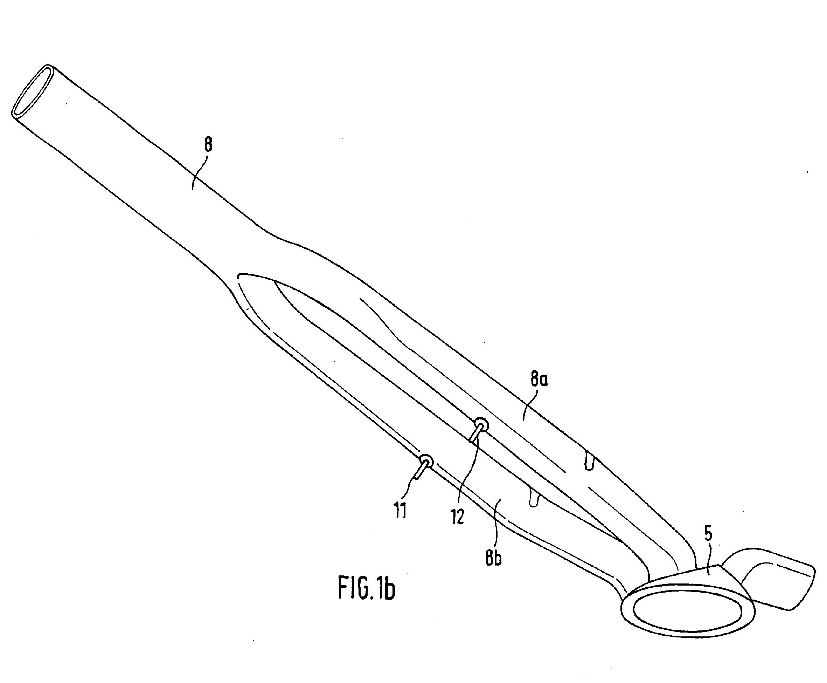

Figur 1b zeigte eine perspektivische Darstellung eines Einlasskanals 8, der sich in zwei Einlasskanalrohre 8a, 8b gabelt. Über die Einlasskanalrohre 8a, 8b steht der Zylinderkopf 5 in Fluidverbindung mit dem Einlasskanal 8. Über den Einlasskanal 8 wird dem Verbrennungsmotor Luft zugeführt. Kraftstoff bzw. Wasserstoff wird über Einblasventile 11, 12 in die Einlasskanalrohre 8a, 8b eingeblasen, was an sich Stand der Technik ist. Beim Stand der Technik wird der Kraftstoff bzw. Wasserstoff jedoch von "oben her" in die Einlasskanalrohre 8a, 8b, d.h. schräg nach unten in Richtung der Einlassventile 6 in die Einlasskanalrohre 8a, 8b eingeblasen. Im Unterschied dazu wird gemäß der Erfindung der Wasserstoff "von unten her" in die Einlasskanalrohre 8a, 8b eingeblasen. Beschreibt man die Einblasrichtung, in der der Wasserstoff über die Einblasventile 11, 12 in die Einlasskanalrohre 8a, 8b eingeblasen wird, jeweils durch einen Mündungsvektor, so weist der Mündungsvektor eine Vektorkomponente auf, die parallel zu dem in Figur 1a gezeigten Richtungsvektor 10 ist.

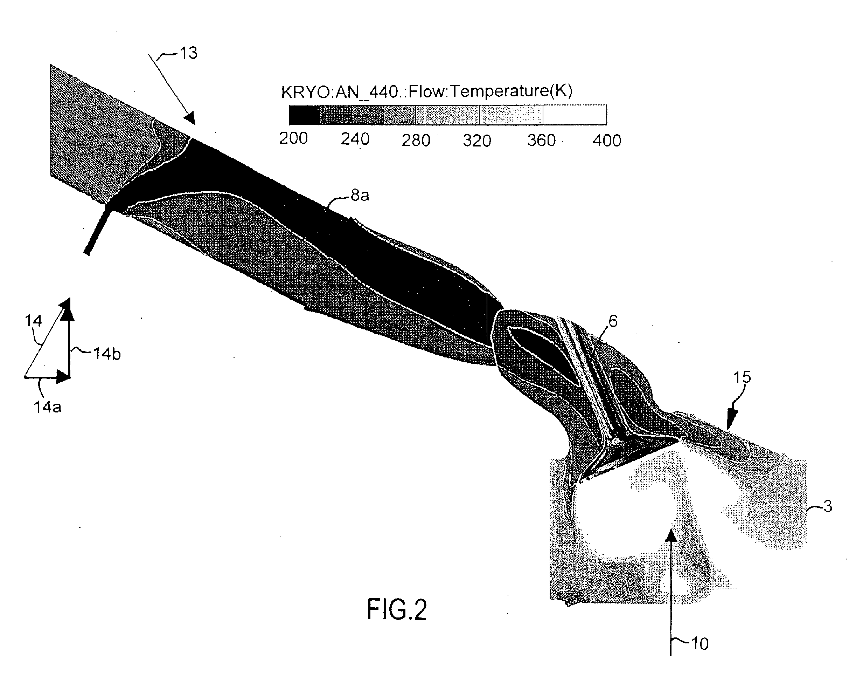

Klarer wird dies, wenn man Figur 2 betrachtet. Wie bereits erwähnt, ist der Richtungsvektor 10 nach oben, d.h. zum oberen Totpunkt des Kolbens hin orientiert. Stand der Technik ist es, den Kraftstoff von oben nach unten, z.B. in Richtung des Mündungsvektors 13 in das Einlasskanalrohr 8a einzublasen. Dies ist thermodynamisch ungünstig, da sich bei dieser Einblasrichtung im Bereich der Zylinderwand eine erhöhte und im oberen Brennraumbereich eine verminderte Wasserstoffkonzentration einstellt, was zu sehr hohen Temperaturen im oberen Zylinder bzw. im Bereich des Zylinderkopfs führt. Derartige "Hot-Spots" können zu Verbrennungsanomalien führen, d.h. zu Klopfgeräuschen, Glüh- bzw. Frühzündungen oder Rückzündungen.

Simulationen haben ergeben, dass es wesentlich günstiger ist, nicht von oben nach unten, sondern von unten nach oben in das Einlasskanalrohr 8a einzublasen. Der Wasserstoff kann beispielsweise senkrecht zur Längsrichtung des Einlasskanalrohrs 8a in das Einlasskanalrohr 8a eingeblasen werden. Die Einblasrichtung ist in Fig. 2 durch den Mündungsvektor 14 beschrieben. Der Mündungsvektor 14 lässt sich vektoriell in zwei Komponenten 14a, 14b zerlegen, nämlich eine Komponente 14a, die senkrecht zum Richtungsvektor 10 ist und eine Komponente 14b, die parallel zum Richtungsvektor 10 ist und dieselbe Orientierung hat, wie der Richtungsvektor 10.

Wie aus der in Figur 2 gezeigten Isothermendarstellung ersichtlich ist, trifft der in das Einlasskanalrohr 8a eingeblasene Wasserstoff auf die "obere" Hälfte des Einlasskanalrohrs 8a auf und strömt anschließend in dem Einlasskanalrohr 8a zum Einlassventil 6 und von dort in den Zylinder 3. Der Wasserstoff strömt primär an der Innenwandung der oberen Hälfte des Einlasskanalrohrs 8a entlang. Bei einer Einblasung des Wasserstoffs von unten nach oben ergibt sich somit im Bereich des "Brennraumdachs" 15 eine erhöhte Wasserstoffkonzentration. Dementsprechend sind die Temperaturen im oberen Brennraumbereich geringer als bei einer Einblasung von oben nach unten. Bei einer Kraftstoffeinblasung von oben nach unten hingegen ergäbe sich im Bereich des Brennraumdachs 15, d.h. rund um die Zündkerze (nicht dargestellt) bzw. im Bereich zwischen der Zündkerze und dem Auslassventil (nicht dargestellt) eine sehr heiße Zone, in der es zu Verbrennungsanomalien kommen kann. Bei einer Einblasung von unten nach oben hingegen sind die heißesten Temperaturbereiche nicht unmittelbar im Bereich des Brennraumdachs, sondern "unterhalb" des Einlassventils.

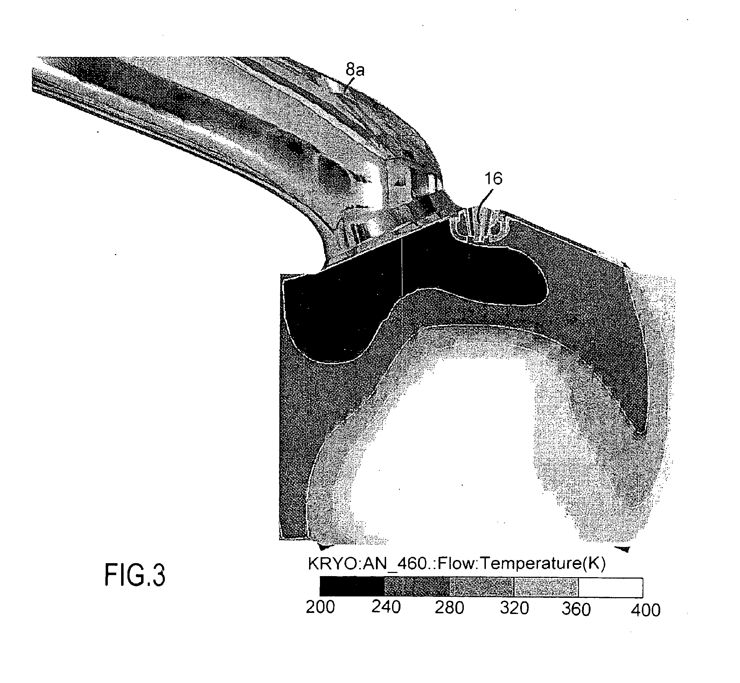

Figur 3 zeigt den "Einlassvorgang" zu einem etwas späteren Zeitpunkt. Wie aus Figur 3 ersichtlich ist, sind die oberen Brennraumbereiche, insbesondere rund um die Zündkerze 16 herum, dunkler eingefärbt als die weiter unten liegenden Brennraumbereiche.

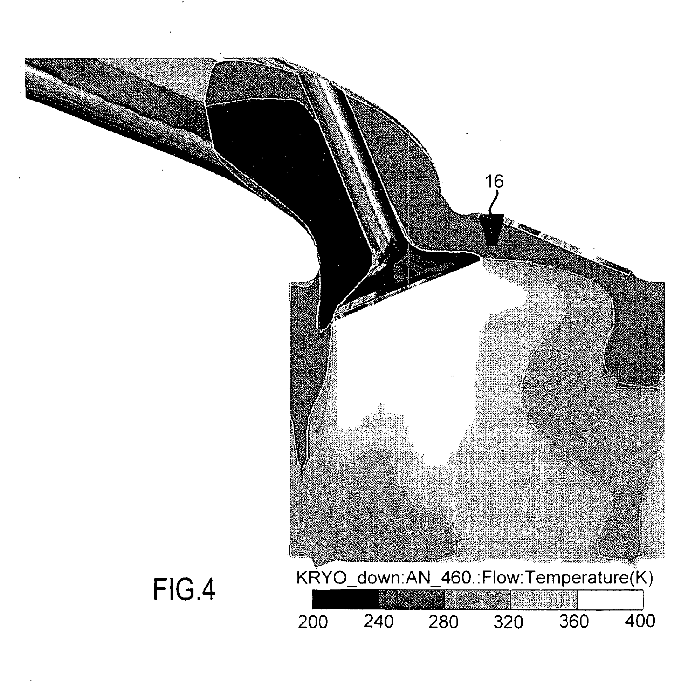

Figur 4 zeigt exemplarisch eine Temperaturverteilung bei einer Einblasung von oben nach unten, d.h. wie dies beim Stand der Technik erfolgt. Hier reichen die heller eingefärbten Bereiche, d.h. die Brennraumbereiche, in denen besonders hohe Temperaturen auftreten, weiter nach oben in Richtung der Zündkerze 16, was ungünstig ist, da dadurch leichter Verbrennungsanomalien entstehen können.

Zusammenfassend werden mit der Erfindung insbesondere folgende Vorteile erreicht:
- Beseitigung der Glüh- und Rückzündungsgefahr bei kryogenen betriebenen Wasserstoffmotoren.
- Erweiterung der Betriebsgrenzen des Wasserstoffmotors bzgl. Frühverstellung des Zündzeitpunktes bei stöchiometrischem Luftverhältnis.
- Damit positive Beeinflussung des Wirkungsgrads des Verbrennungsmotors.

## Patentansprüche

1. Mit Wasserstoff betreibbarer Verbrennungsmotor (1) für Fahrzeuge, mit
- mindestens einem Zylinder (3),
- einem in dem Zylinder (3) angeordneten Kolben (4), der zwischen einer unteren Kolbenstellung und einer oberen Kolbenstellung verschiebbar ist, wobei durch die untere und die obere Kolbenstellung ein Richtungsvektor (10) definiert ist, der von der unteren zur oberen Kolbenstellung orientiert ist,
- einem Zylinderkopf (5), der den Zylinder (3) von seiner oberen Stirnseite her verschließt,
- einer in dem Zylinderkopf vorgesehenen Einlassöffnung und einem Einlassventil (6),
- einem mit dem Zylinderkopf (5) verbundenen Einlasskanal (8, 8a, 8b), der bei geöffnetem Einlassventil (6) über die Einlassöffnung in Fluidverbindung mit dem Zylinder (3) steht, und
- einem Wasserstoffkanal (11, 12), der in den Einlasskanal (8, 8a, 8b) mündet, wobei die Richtung und die Orientierung, in der der Wasserstoffkanal (11, 12) in den Einlasskanal (8, 8a, 8b) mündet, durch einen Mündungsvektor (14) beschrieben ist,
**dadurch gekennzeichnet, dass**
der Wasserstoffkanal (11, 12) so angeordnet ist, dass der Mündungsvektor (14) eine Vektorkomponente (14b) aufweist, welche dieselbe Richtung und dieselbe Orientierung wie der Richtungsvektor (10) hat.

2. Mit Wasserstoff betreibbarer Verbrennungsmotor (1) für Fahrzeuge, mit
- mindestens einem Zylinder (3), der eine Zylinderwand aufweist,
- einem Zylinderkopf (5), der den Zylinder von einer oberen Stirnseite des Zylinders (3) her verschließt,
- einer in den Zylinder (3) ragenden Zündkerze (16), die in einem Zentralbereich, in dem eine Mittellängsachse des Zylinders (3) den Zylinderkopf (5) schneidet, in dem Zylinderkopf (5) angeordnet ist,
- einer in dem Zylinderkopf (5) vorgesehenen Einlassöffnung, über die Brenngas in den Zylinder einbringbar ist, wobei die Einlassöffnung in Bezug auf die Position der Zündkerze (16) in Richtung der Zylinderwand angeordnet ist,
- einem Einlasskanal (8, 8a, 8b), der bei geöffnetem Einlassventil (6) in Fluidverbindung mit dem Zylinder steht, wobei der Einlasskanal (8, 8a, 8b) durch einen Schnitt in Längsrichtung des Einlasskanals (8, 8a, 8b) gedanklich in eine erste Einlasskanalhälfte und eine zweite Einlasskanalhälfte unterteilbar ist, wobei die erste Einlasskanalhälfte nahe der Zündkerze (16) und die zweite Einlasskanalhälfte nahe der Zylinderwand in den Zylinder (3) mündet, und
- einem Wasserstoffkanal (11, 12), der in den Einlasskanal (8, 8a, 8b) mündet,
**dadurch gekennzeichnet, dass**
der Wasserstoffkanal (11, 12) so angeordnet ist, dass der in den Einlasskanal (8, 8a, 8b) eingeblasene Wasserstoff primär auf die erste Einlasskanalhälfte trifft.

3. Mit Wasserstoff betreibbarer Verbrennungsmotor nach Anspruch 1 oder 2, **dadurch gekennzeichnet, dass** der Wasserstoffkanal (11, 12) senkrecht in Bezug auf eine Längsrichtung des Einlasskanals (8, 8a, 8b) angeordnet ist.

4. Mit Wasserstoff betreibbarer Verbrennungsmotor (1), **dadurch gekennzeichnet, dass** der Wasserstoffkanal (11, 12) schräg in Bezug auf eine Längsrichtung des Einlasskanals (8, 8a, 8b) angeordnet ist.
